(19) Europäisches Patentamt
European Patent Office
Office européen des brevets

(11) **EP 4 398 379 A1**

(12) **EUROPEAN PATENT APPLICATION**
published in accordance with Art. 153(4) EPC

(43) Date of publication:
**10.07.2024 Bulletin 2024/28**

(21) Application number: **22864132.0**

(22) Date of filing: **29.07.2022**

(51) International Patent Classification (IPC):
**H01M 10/44** (2006.01)   **H01M 10/42** (2006.01)
**H01M 10/48** (2006.01)   **H02J 7/00** (2006.01)

(52) Cooperative Patent Classification (CPC):
**H01M 10/42; H01M 10/44; H01M 10/48; H02J 7/00;**
**Y02E 60/10**

(86) International application number:
**PCT/JP2022/029277**

(87) International publication number:
**WO 2023/032544 (09.03.2023 Gazette 2023/10)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **03.09.2021 JP 2021143663**

(71) Applicant: **Hitachi, Ltd.**
**Tokyo 100-8280 (JP)**

(72) Inventors:
• **ITO, Shota**
**Tokyo 100-8280 (JP)**

• **KOMATSU, Daiki**
**Tokyo 100-8280 (JP)**
• **INOUE, Takeshi**
**Tokyo 100-8280 (JP)**
• **HONKURA, Kohei**
**Tokyo 100-8280 (JP)**
• **KAWAJI, Jun**
**Tokyo 100-8280 (JP)**

(74) Representative: **Mewburn Ellis LLP**
**Aurora Building**
**Counterslip**
**Bristol BS1 6BX (GB)**

(54) **SECONDARY BATTERY CONTROL DEVICE, SECONDARY BATTERY SYSTEM, AND SECONDARY BATTERY CAPACITY RECOVERY METHOD**

(57)    A capacity of a secondary battery can be appropriately recovered. Therefore, there has been provided a control device (500) for a secondary battery (510) that includes a plurality of battery cells (10), the control device including: an operation mode selection part (420) that selects one of a first operation mode (Mn) and a second operation mode (Mr) as an operation mode; a first discharge control part (410) that stops discharging the secondary battery when the operation mode selection part selects the first operation mode (Mn), and upon a terminal voltage of one of the plurality of the battery cells falling below a first voltage; and a second discharge control part (412) that applies a discharge current to the secondary battery when the operation mode selection part selects the second operation mode (Mr), such that a terminal voltage of one of the plurality of the battery cells satisfying a predetermined deterioration condition is lower than the first voltage ($V_{low}$), and a terminal voltage of each of other battery cells is equal to or higher than the first voltage ($V_{low}$).

FIG. 7

**Description**

Technical Field

The present invention relates to a secondary battery control device, a secondary battery system, and a secondary battery capacity recovery method.

Background Art

As the background art of the present technical field, the abstract of PTL 1 below describes as follows: "An ECU 960 controls a PCU 920 to execute capacity recovery control to recover the capacity of a battery pack 10. The capacity recovery control includes a discharge mode and a capacity recovery mode. In the discharge mode, the ECU 960 discharges the battery pack 10 up to a predetermined over-discharging range. In the capacity recovery mode, the ECU 960 repeatedly executes, in the over-discharging range, voltage raising of the lithium ion secondary battery with discharging stopped and pulse discharging in which the lithium ion secondary battery is discharged while a discharging current is vibrated".

Further, paragraph 0080 of the specification of PTL 2 below describes as follows: "As described above, according to the present invention, the situation of the charge-discharge curve of the entire positive electrode and the charge-discharge curve of the entire negative electrode inside the secondary battery can be seen in a non-destructive manner. This makes it possible to specify the cause of battery deterioration in a non-destructive manner, and determine the life with high accuracy. Furthermore, according to the present invention, by applying the result of the reproduction calculation, it is also possible to determine in a non-destructive manner an appropriate use range of the deteriorated battery with high accuracy, and acquire the amount of decrease in charge and discharge reactive species". The descriptions of these documents are included as part of the present specification.

Citation List

Patent Literatures

PTL 1: JP 2019-106333 A
PTL 2: JP 4884404 B2

Summary of Invention

Technical Problem

Meanwhile, in the technology described above, there is a demand to recover the capacity of the secondary battery in a more appropriate manner.

The present invention has been made in view of the above circumstances, and an object of the present invention is to provide a secondary battery control device, a secondary battery system, and a secondary battery capacity recovery method, which are capable of appropriately recovering the capacity of the secondary battery.

Solution to Problem

In order to solve the above problems, a secondary battery control device according to the present invention is a secondary battery control device that includes: an operation mode selection part that selects one of a first operation mode and a second operation mode as an operation mode; a first discharge control part that stops discharging the secondary battery when the operation mode selection part selects the first operation mode, and upon a terminal voltage of one of the plurality of the battery cells falling below a first voltage; and a second discharge control part that applies a discharge current to the secondary battery when the operation mode selection part selects the second operation mode, such that a terminal voltage of one of the plurality of the battery cells satisfying a predetermined deterioration condition is lower than the first voltage, and a terminal voltage of each of the other battery cells is equal to or higher than the first voltage.

Advantageous Effects of Invention

According to the present invention, the capacity of the secondary battery can be appropriately recovered.

Brief Description of Drawings

[FIG. 1] FIG. 1 is a schematic cross-sectional view of a bipolar battery cell.
[FIG. 2] FIG. 2 is a schematic side view of an energy storage element.
[FIG. 3] FIG. 3 is a schematic block diagram illustrating a configuration of a battery module.
[FIG. 4] FIG. 4 is a schematic block diagram illustrating a configuration of a battery pack.
[FIG. 5] FIG. 5 is a block diagram conceptually illustrating an example of a control device.
[FIG. 6] FIG. 6 is a block diagram of a computer included in a control part.
[FIG. 7] FIG. 7 is a block diagram illustrating functions of a control part.
[FIG. 8] FIG. 8 is a diagram illustrating discharge characteristics of a battery cell.
[FIG. 9] FIG. 9 is a diagram illustrating a capacity recovery rate and an amount of change in positive electrode utilization rate in each of a first example and comparative examples.
[FIG. 10] FIG. 10 is a diagram illustrating a capacity recovery rate and an amount of change in positive electrode utilization rate in a second example and a comparative example.
[FIG. 11] FIG. 11 is a diagram illustrating a capacity recovery rate and an amount of change in positive electrode utilization rate in a third example and a comparative example.

Description of Embodiments

[Outline of Embodiment]

A lithium-ion battery is one of nonaqueous electrolyte secondary batteries, and due to its high energy density, the lithium-ion battery is also used as a battery of a portable device or a battery of an electric vehicle in recent years. However, it is known that a lithium-ion battery deteriorates with use, resulting in a decrease in battery capacity.
In a lithium-ion battery, generally, a lithium metal oxide is used as an active material of a positive electrode, and a carbon material such as graphite is used as an active material of a negative electrode. The positive electrode and the negative electrode of the lithium-ion battery are formed by adding a binder, a conductive agent, and the like to a minute active material particle group to form a slurry, which is then applied to a metal foil.
Inside the lithium-ion battery, lithium ions released from the active material of the positive electrode become occluded in the active material of the negative electrode during charging, and the lithium ions occluded in the active material of the negative electrode are released and become occluded in the active material of the positive electrode during discharging. As the lithium ions move between the electrodes as described above, a current flows between the electrodes of the external circuit.
In such a lithium-ion battery, the capacity decreases due to:

(1) electrical isolation of the positive electrode active material,
(2) electrical isolation of the negative electrode active material; and
(3) immobilization of lithium ions traveling between electrodes.

The factor (3) above is caused by solidification of lithium ions as a film on the surface of the negative electrode or binding of lithium ions in the negative electrode due to the decomposition of the electrolyte. Of these, the capacity decrease due to the binding of lithium ions in the negative electrode can be recovered by electrochemical treatment. For example, by raising the potential of the negative electrode above a normal use range, lithium ions bound to the negative electrode are released, and the capacity is recovered. This corresponds to overdischarging the battery, and means lowering a state of charge (SOC) of the battery defined by the use voltage range of the battery below 0%.
However, overdischarging the secondary battery that has not seriously deteriorated may accelerate the material deterioration of the positive and negative electrodes and the decomposition of the electrolyte, which may rather accelerate deterioration in the secondary battery. When a secondary battery pack includes one cell, overdischarge conditions can be set according to the deterioration state of the cell. However, when the secondary battery pack is configured by connecting a plurality of cells in series or in parallel, cells with different degrees of deterioration coexist, so that deterioration in a cell that has not seriously deteriorated may be accelerated depending on overdischarge conditions. Note that the cell is a minimum constituent unit of the secondary battery pack, and means a secondary battery including a positive electrode, a negative electrode, and an electrolyte.

According to the technology to which the content of PTL 1 described above is applied, it is considered that a capacity recovery method capable of effectively recovering the capacity of the lithium-ion secondary battery in a short time can be provided. That is, after the lithium-ion secondary battery is discharged to the overdischarge region, it is considered possible to repeatedly execute a voltage increase due to the stop of discharge, and pulse discharge for discharging the lithium-ion secondary battery while vibrating the discharge current. As a result, it is considered possible to realize a reduction in the time required for capacity recovery.

However, there is room for improvement in the method for recovering the capacity of the battery by pulse discharge in the overdischarge region as described above. For example, when a lithium-ion secondary battery pack includes a plurality of cells connected in series or in parallel, the uniform application (flow) of pulse discharge may accelerate deterioration in a cell with a degree of deterioration that is not serious.

Therefore, an embodiment to be described later solves the problem described above by selectively recovering the capacity of a cell with greater deterioration in a secondary battery pack to which a plurality of cells are connected.

[Structure of Battery Cell]

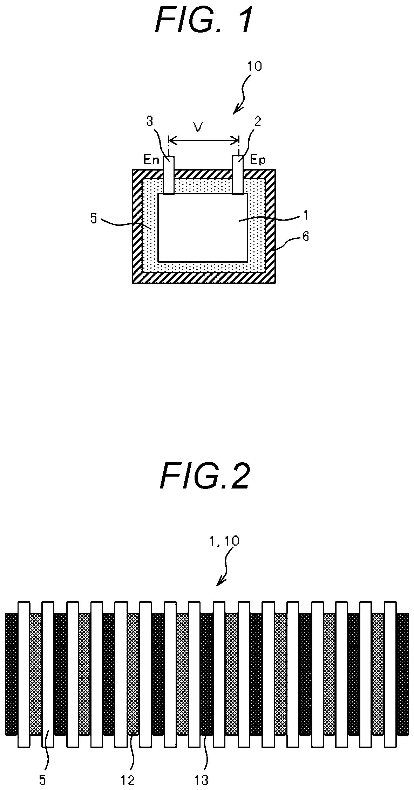

First, a structure example of a bipolar battery cell applicable to the embodiment will be described with reference to FIGS. 1 and 2.

FIG. 1 is a schematic cross-sectional view of a bipolar battery cell 10.

In FIG. 1, the battery cell 10 is a cell of a lithium-ion battery, and includes an energy storage element 1, a positive electrode terminal 2, a negative electrode terminal 3, and an exterior material 6. A separator 5 is included in the energy storage element 1. The exterior material 6 is configured using a laminate film or a material similar thereto. Note that the shape of the battery cell 10 is not limited to a square shape as illustrated in FIG. 1, but may be a cylindrical shape although not illustrated.

FIG. 2 is a schematic side view of the energy storage element 1.

As illustrated in FIG. 2, in the energy storage element 1, a plurality of positive electrodes 12 and a plurality of negative electrodes 13 are alternately stacked with the separator 5 interposed therebetween. The energy storage element 1 illustrated in FIG. 1 corresponds to a region where the positive electrode 12 and the negative electrode 13 are seen to overlay each other. Note that the structure of the energy storage element 1 is not limited to the stacked type as illustrated in FIG. 2. That is, although not illustrated in the drawing, the positive electrode 12 and the negative electrode 13 may be stacked to face each other with the separator 5 interposed therebetween, and then wound to produce a wound type. The energy storage element 1 further includes an electrolyte (not illustrated), and the electrolyte is impregnated into the micropores of the positive electrode 12, the negative electrode 13, the separator 5 and the like. As the separator 5, for example, polypropylene can be applied. However, in addition to polypropylene, a microporous film made of polyolefin such as polyethylene, a nonwoven fabric, and the like can also be applied as the separator 5.

The positive electrode 12 and the negative electrode 13 are each prepared by applying a mixture of an appropriate electrode active material, a conductive agent, a binder, and the like to an appropriate metal current collecting foil. A metal tab is connected to each of the current collecting foils of the positive electrode 12 and the negative electrode 13. The exterior material 6 is sealed such that only the tab portion is exposed to the outside of the exterior material 6. This makes the tabs the positive electrode terminal 2 and the negative electrode terminal 3 in FIG. 1. Hereinafter, the potentials of the positive electrode 12 and the negative electrode 13 are referred to as a positive electrode potential $Ep$ and a negative electrode potential $En$. A difference therebetween, that is, "$Ep - En$" is a voltage between the positive electrode terminal 2 and the negative electrode terminal 3, and this is referred to as a cell voltage $V$.

As the current collecting foil of the positive electrode 12, an aluminum foil having a thickness of 10 to 100 um, a perforated aluminum foil having a thickness of 10 to 100 um and a hole diameter of 0.1 to 10 mm, an expanded metal, a foamed metal plate, or the like is used. In addition to aluminum, stainless steel, titanium, and the like can also be applied as the material of the current collecting foil. In the present embodiment, any current collector can be used without being limited by a material, a shape, a manufacturing method, and the like.

The electrode active material of the positive electrode 12 desirably contains reactive species therein. The reactive species of the lithium-ion battery are lithium ions. In this case, the electrode active material of the positive electrode 12 contains a lithium-containing compound capable of reversibly inserting and desorbing lithium ions. The type of the electrode active material of the positive electrode 12 is not particularly limited, and examples thereof include lithium transition metal phosphates such as lithium cobaltate, manganese-substituted lithium cobaltate, lithium manganate, lithium nickelate, and olivine type lithium iron phosphate, and $Li_wNi_xCo_yMn_zO_2$ (where w, x, y, and z are 0 or positive values.). As the electrode active material of the positive electrode 12, one kind alone or two or more kinds of the above materials may be contained.

As the current collecting foil of the negative electrode 13, a copper foil having a thickness of 10 to 100 um, a perforated copper foil having a thickness of 10 to 100 $\mu$m and a hole diameter of 0.1 to 10 mm, an expanded metal, a foamed metal plate, or the like is used. In addition to copper, stainless steel, titanium, and the like can also be applied as the material of the current collecting foil. In the present embodiment, any current collector can be used without being limited by a material, a shape, a manufacturing method, and the like.

The electrode active material of the negative electrode 13 contains a material capable of reversibly inserting and desorbing lithium ions. The type of the electrode active material of the negative electrode 13 is not particularly limited, and it is possible to apply, for example, natural graphite, a composite carbonaceous material obtained by forming a film on natural graphite by a dry chemical vapor deposition (CVD) method or a wet spraying method, artificial graphite produced by firing using a resin material such as epoxy or phenol or a pitch-based material obtained from petroleum or coal as a raw material, silicon (Si), graphite obtained by mixing silicon, a non-graphitizable carbon material, lithium titanate $Li_4Ti_5O_{12}$, niobium titanium-based oxide $TiNb_2O_7$, and the like. The negative electrode active material may contain one kind alone or two or more kinds of the above materials.

The energy storage element 1 is impregnated with an electrolyte. The electrolyte is not particularly limited, and in the case of a lithium-ion battery, it is possible to apply, for example, an aprotic organic solvent such as ethylene carbonate (EC), propylene carbonate (PC), butylene carbonate (BC), dimethyl carbonate (DMC), ethyl methyl carbonate (EMC), diethyl carbonate (DEC), methyl propyl carbonate (MPC), or ethyl propyl carbonate (EPC).

The electrolyte may be obtained by dissolving, in a mixed solvent of two or more of these organic compounds, a lithium salt such as lithium hexafluorophosphate, lithium tetrafluoroborate, lithium perchlorate, lithium iodide, lithium chloride, lithium bromide, $LiB[OCOCF_3]_4$, $LiB[OCOCF_2CF_3]_4$, $LiPF_4(CF_3)_2$, $LiN(SO_2CF_3)_2$, $LiN(SO_2CF_2CF_3)_2$, or a mixed lithium salt of two or more of these.

A solid electrolyte may be used instead of the electrolyte. The solid electrolyte is not particularly limited, and examples thereof include ion conductive polymers such as polyethylene oxide, polyacrylonitrile, polyvinylidene fluoride, polymethyl methacrylate, polyhexafluoropropylene, and polyethylene oxide. When these solid polymer electrolytes are used, the separator 5 can be omitted.

[Configuration of Embodiment]

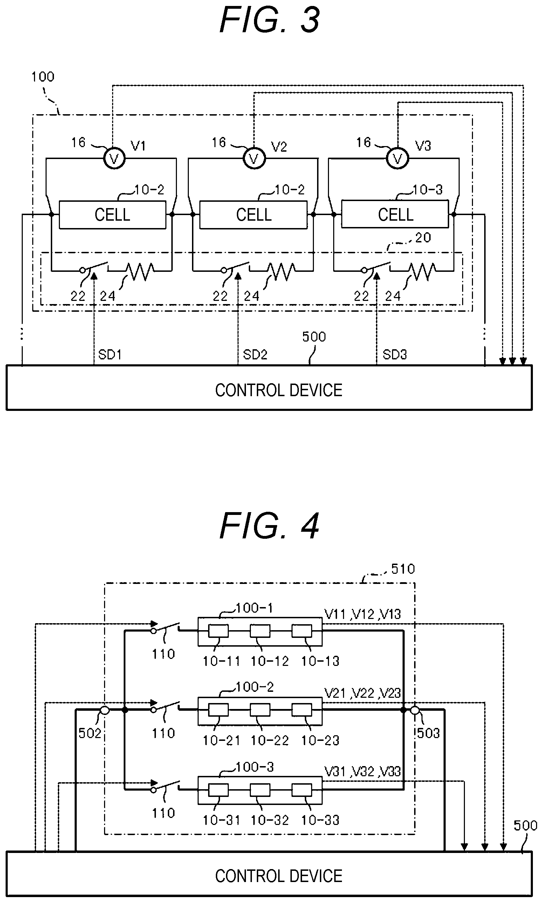

FIG. 3 is a schematic block diagram illustrating a configuration of a battery module (basic battery unit) 100 applied to the present embodiment.

In FIG. 3, the battery module 100 includes three battery cells 10-1, 10-2, 10-3 connected in series, three voltage sensors 16, and a balancing circuit 20. Each of the three battery cells 10-1 to 10-3 is equal to the battery cell 10 illustrated in FIG. 1, and hereinafter, the battery cells 10-1 to 10-3 may be collectively referred to as the "battery cell 10". The three voltage sensors 16 output measurement results of cell voltages V1, V2, V3 (terminal voltages) of the battery cells 10-1 to 10-3.

The balancing circuit 20 includes three switches 22 and three resistors 24 connected in series to these switches 22, respectively. Series circuits of the switches 22 and the resistors 24 are connected in parallel to the battery cells 10-1 to 10-3, respectively. The battery module 100 outputs the measurement results of the cell voltages V1 to V3 to a control device 500.

The on/off states of the respective switches 22 are controlled based on control signals SD1, SD2, SD3 supplied from the control device 500. Based on the measurement results of the cell voltages V1 to V3, the control device 500 outputs the control signals SD1, SD2, SD3 to reduce the difference among the cell voltages V1 to V3, thereby discharging the battery cell 10 having a high voltage.

In the following description, a "battery cell" may be simply referred to as a "cell", and a "battery module" may be simply referred to as a "module". In the example illustrated in FIG. 3, one battery module 100 includes three battery cells 10, but the number of battery cells 10 included in one battery module 100 may be any number equal to or more than one.

In the example illustrated in FIG. 3, for simplicity of description, a passive type including the switch 22 and the resistor 24 is shown as the balancing circuit 20. However, the balancing circuit 20 may adopt an active type balancing circuit (not illustrated). That is, a balancing circuit that charges a cell having a low cell voltage by a charge of a cell having a high cell voltage may be adopted.

FIG. 4 is a schematic block diagram illustrating a configuration of a battery pack 510 applied to the present embodiment.

In FIG. 4, the battery pack 510 includes a positive electrode terminal 502, a negative electrode terminal 503, three battery modules 100-1, 100-2, 100-3, and three switches 110. Each of the battery modules 100-1 to 100-3 is equal to the battery module 100 illustrated in FIG. 3. Therefore, the battery modules 100-1 to 100-3 may be collectively referred to as the "battery module 100".

An on/off state of each switch 110 is set based on a command supplied from the control device 500. When all the switches 110 are turned on, the battery modules 100-1 to 100-3 are connected in parallel between the positive electrode terminal 502 and the negative electrode terminal 503 of the battery pack 510. The battery cells 10, three of which are included in each of the three battery modules 100-1 to 100-3, are referred to as battery cells 10-11, 10-12, 10-13, 10-21, 10-22, 10-23, 10-31, 10-32, 10-33.

The battery pack 510 notifies the control device 500 of the measurement results of cell voltages V11, V12, V13, V21, V22, V23, V31, V32, V33 (terminal voltages) of these battery cells. As described above, the control device 500 controls the on/off states of the plurality of switches 110. The control device 500 can thus control the flow of the current according to the degree of deterioration in each module 100.

However, the switch 110 is not an essential component, and can be omitted. That is, the battery modules 100-1 to 100-3 may be connected in parallel between the positive electrode terminal 502 and the negative electrode terminal 503. The cost can be reduced by omitting the switch 110, and the power loss due to the on-resistance of the switch 110 can also be reduced. In the illustrated example, the battery pack 510 includes the three battery modules 100-1 to 100-3, but the number of battery modules 100 included in the battery pack 510 is not particularly limited. For example, the battery pack 510 may include only one module 100. The battery pack 510 may include a voltage sensor and a current sensor that measure the voltage and current of each of the battery modules 100-1 to 100-3, or may include a thermometer for measuring the internal temperature of the battery pack 510.

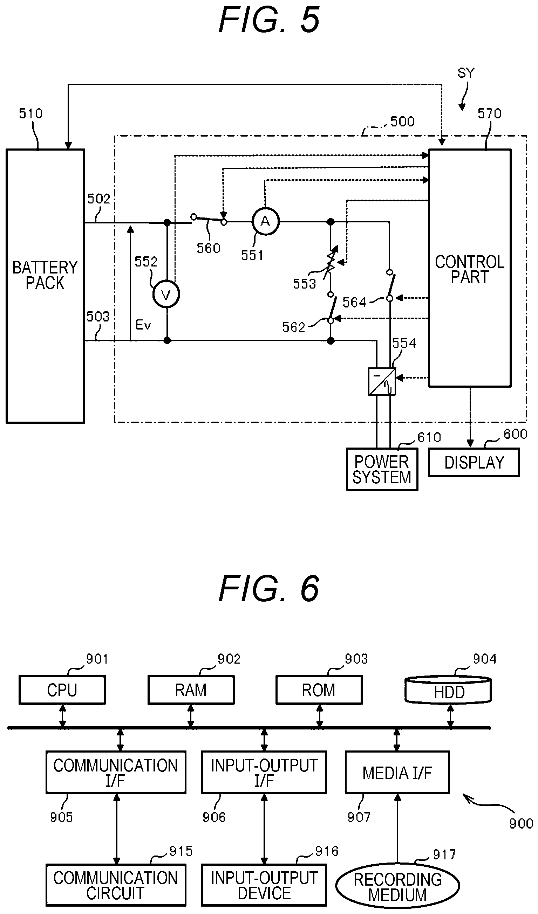

FIG. 5 is a block diagram illustrating a configuration of a secondary battery system SY according to a first embodiment.

In FIG. 5, the secondary battery system SY includes a battery pack 510 (secondary battery) and a control device 500 (secondary battery control device). The battery pack 510 is connected to the control device 500 via the positive electrode terminal 502 and the negative electrode terminal 503.

The control device 500 includes an ammeter 551, a voltmeter 552, a variable resistor 553, a power converter 554, switches 560,562,564, and a control part 570. The power converter 554 converts DC power discharged from the battery pack 510 into AC power and supplies the AC power to a power system 610. The power converter 554 converts the AC power supplied from the power system 610 into DC power to charge the battery pack 510. The measurement results of the cell voltages V11 to V33 (cf. FIG. 4) in the battery pack 510 are supplied to the control part 570. Furthermore, the measurement results of the ammeter 551 and the voltmeter 552 are also supplied to the control part 570. These measurement results are the current value of the charge-discharge current flowing through the battery pack 510 and a battery voltage Ev.

The control part 570 outputs control signals to the switches 560,562,564, the variable resistor 553, and the power converter 554, based on the various input data. The control part 570 also outputs various image data to an external display 600. Note that the configuration of the control device 500 is not limited to that of FIG. 5, and it is possible to adopt various circuit configurations capable of controlling the input current to the battery pack 510 based on the input signal from the battery pack 510.

FIG. 6 is a block diagram of a computer 900 included in the control part 570.

In FIG. 6, the computer 900 includes a CPU 901, a RAM 902, a ROM 903, an HDD 904, a communication interface (I/F) 905, an input-output I/F 906, and a media I/F 907. The communication I/F 905 is connected to an external communication circuit 915. The input-output I/F 906 is connected to the input-output device 916. The media I/F 907 reads and writes data from and in a recording medium 917. The ROM 903 stores a control program executed by the CPU, various data, and the like. The CPU 901 implements various functions by executing an application program read into the RAM 902.

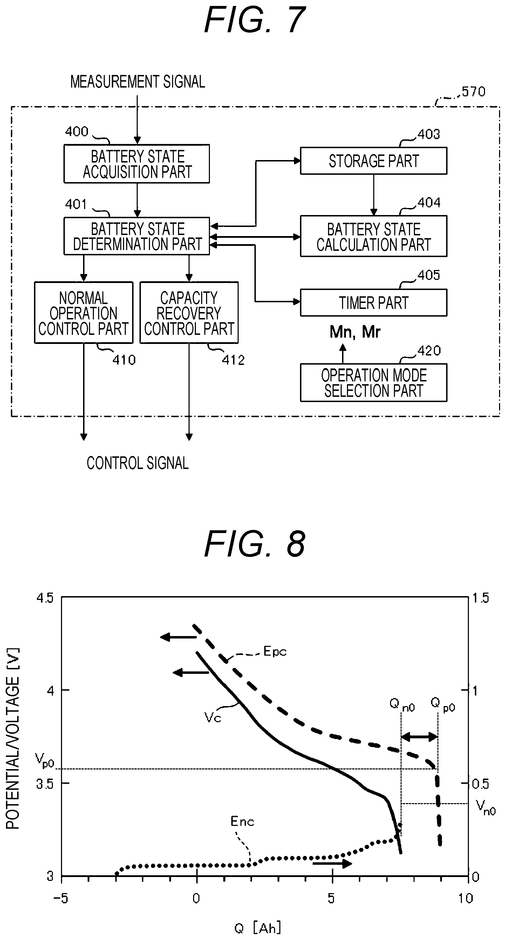

FIG. 7 is a block diagram illustrating functions of the control part 570, and each block in the drawing indicates a function implemented using the application program or the like.

That is, the control part 570 includes a battery state acquisition part 400, a battery state determination part 401, a storage part 403, a battery state calculation part 404, a timer part 405, a normal operation control part 410 (first discharge control part), a capacity recovery control part 412 (second discharge control part), and an operation mode selection part 420.

The operation mode selection part 420 selects either a normal mode Mn (first operation mode) or a capacity recovery mode Mr (second operation mode) as the operation mode of the control device 500. The operation mode may be selected by a manual operation of a user, or may be selected according to the state of the battery pack 510. The normal mode Mn is an operation mode in which normal charging and discharging are performed for the battery pack 510. On the other hand, the capacity recovery mode Mr is an operation mode in which the capacity recovery control is performed for some or all of the battery cells 10-11 to 10-33 (cf. FIG. 4).

The battery state acquisition part 400 receives measurement signals from the battery pack 510, the ammeter 551, the voltmeter 552, and the like illustrated in FIG. 5, and outputs measurement values such as the detected voltage value and current value to the battery state determination part 401. The timer part 405 acquires various types of time information such as a charging time and a discharging time of the battery pack 510.

The storage part 403 stores various types of information, and supplies the stored information to the battery state determination part 401, the battery state calculation part 404, and the like as necessary. The stored information includes the following.

· A correspondence table between the cell voltage V and the SOC (or the amount of electricity) of the battery cell 10
· The initial capacity of the battery cell 10
· Information input from the battery state determination part 401.

The battery state determination part 401 acquires various states of the battery pack 510 based on various measurement values input from the battery state acquisition part 400 and time information supplied from the timer part 405. The acquired states include the amount of electricity of each battery cell 10 in the battery pack 510. The battery state determination part 401 stores the battery voltage Ev and the cell voltages V11 to V33 in the storage part 403 in association with the current time. Thereby, the storage part 403 stores time-series information of the battery voltage Ev and the cell voltages V11 to V33.

The battery state determination part 401 compares various determination values input from the battery state calculation part 404 with various control values input from the storage part 403. Then, the battery state determination part 401 determines the state of the battery pack 510, and outputs the result to the normal operation control part 410 and the capacity recovery control part 412.

The battery state calculation part 404 appropriately corrects the acquired measurement value and initial value, calculates a physical quantity for determining the battery state, and outputs the physical quantity to the battery state determination part 401. Specifically, the battery SOC is calculated from the correspondence table between the battery voltage and the battery SOC stored in the storage part 403 and the battery voltage input from the battery state determination part 401, and is output to the battery state determination part 401. In addition, the current value and the application time of the discharge pulse are calculated from the battery voltage and the initial capacity of the battery stored in the storage part 403, and are output to the battery state determination part 401.

Note that the calculation method for the battery SOC is not limited to the method shown here, and the battery SOC can be calculated using any method.

The configuration of the control part 570 is not limited to that illustrated in FIG. 7, but only needs to be a configuration that makes it possible to determine the state of the battery pack 510, apply a specific discharge current to the battery pack 510 for a specific time, and hold the battery in an open circuit state.

[Operation of Embodiment]

<Selection of Operation Mode>

In FIG. 7, the operation mode selection part 420 selects either the normal mode Mn or the capacity recovery mode Mr as the operation mode of the control device 500, based on a user operation. In addition, the operation mode selection part 420 can automatically select the operation mode, based on the determination result of the battery state determination part 401 regardless of a user operation. That is, when the battery state determination part 401 determines that "the capacity recovery control is necessary", the capacity recovery mode Mr can be selected, and in other cases, the normal mode Mn can be selected. The battery state determination part 401 may determine the necessity of the capacity recovery control, based on the use history of the battery pack 510, the SOC of the battery pack 510 at the present time, and the like.

<Normal Mode Mn>

When the normal mode Mn is selected as the operation mode, the normal operation control part 410 inputs and outputs power between the battery pack 510 and the power system 610 (cf. FIG. 5) via the power converter 554. That is, in the case of discharging the battery pack 510, the normal operation control part 410 causes the power converter 554 to convert the discharged DC power into AC power and supply the AC power to the power system 610. In the case of charging the battery pack 510, the normal operation control part 410 causes the power converter 554 to convert the AC power supplied from the power system 610 into DC power and supply the DC power to the battery pack 510.

In the normal mode Mn, the normal operation control part 410 controls the discharge current of the battery pack 510 to prevent any of the cell voltages V11 to V33 from becoming a predetermined lower limit voltage $V_{low}$. When any of the cell voltages V11 to V33 falls below the lower limit voltage $V_{low}$, the switch 560 (cf. FIG. 5) is set to the OFF state, and the discharging of the battery pack 510 is forcibly terminated. Note that the lower limit voltage $V_{low}$ is stored in the storage part 403.

<Capacity Recovery Mode Mr>

In the capacity recovery mode Mr, the capacity recovery control part 412 executes the capacity recovery control. During the progress of the capacity recovery control, it is recommended that the user be alerted by indicating on the display 600 that the capacity recovery control is being executed. The content of the capacity recovery control is not particularly limited but may include, for example, applying a high-current discharge pulse to the battery pack 510 and then pausing the operation of the battery pack 510 for a certain time.

That is, the capacity recovery control part 412 recovers the cell capacity decreased due to the instantaneous drop of the cell voltage V (cf. FIG. 1) and the subsequent relaxation. At this time, a greater recovery effect can be obtained by lowering the cell voltage V below the lower limit voltage $V_{low}$ described above. Therefore, in order to prevent the battery system from being urgently stopped due to the cell voltage V falling below $V_{low}$, the lower limit voltage of the cell is set to be lower than $V_{low}$ in the capacity recovery control. The application and pause of the discharge pulse may be performed once or repeatedly.

(Control based on voltage condition)

As illustrated in FIGS. 3 and 4, when the battery pack 510 includes the battery module 100 in which the plurality of battery cells 10 are connected in series, the discharge current is uniformly applied to each battery cell 10 in the battery module 100. Thus, when a high-current discharge pulse is applied to the battery pack 510 by the capacity recovery control, the cell voltage V is lowered also for the battery cell 10 having a small decrease in capacity, that is, the battery cell 10 with a lesser degree of deterioration. This may rather accelerate deterioration in the battery cell 10 with a lesser degree of deterioration.

In order to avoid such a situation, the capacity recovery control part 412 of the present embodiment controls the current value of the discharge pulse so that the cell voltage V of the battery cell 10 with a greater degree of deterioration is lower than the lower limit voltage $V_{low}$ and the cell voltage V of the battery cell 10 with a lesser degree of deterioration is equal to or higher than the lower limit voltage $V_{low}$. In other words, the capacity recovery control part 412 executes a step of applying a discharge current to the secondary battery (510) such that the voltage of the battery cell 10 with greater deterioration among the plurality of battery cells 10 is less than the end-of-discharge voltage ($V_{low}$) of the battery cell 10 in normal use, and the terminal voltage of each of the other battery cells 10 is equal to or higher than the end-of-discharge voltage ($V_{low}$) (second step). In general, the battery cell 10 with greater deterioration has a smaller discharge capacity and a larger internal resistance than the other battery cells 10, resulting in a larger voltage drop even when the same discharge current value is applied.

Therefore, when the cell voltage V of the battery cell 10 with a greater degree of deterioration is $V_x$ and the cell voltage V of the battery cell 10 with a lesser degree of deterioration is $V_y$, there is a combination of a discharge current value and a discharging time satisfying Expression (1) below.

$$V_x < V_{low} < V_y \cdots \text{Expression (1)}$$

The capacity recovery control part 412 of the present embodiment controls the current value and the application time of the pulse discharge to satisfy the condition of Expression (1).

The battery state calculation part 404 executes a step of determining the degree of deterioration for each battery cell 10 (a first step of evaluating the deterioration state) . Here, the criterion for determining the degree of deterioration is not particularly limited, and for example, the battery pack 510 is brought into an open circuit state at a predetermined SOC, and the degree of deterioration can be determined based on the cell voltages V11 to V33 at that time. That is, when the measured cell voltages V11 to V33 are equal to or less than a predetermined value $V_{dg}$ (not illustrated), it can be determined that "the degree of deterioration is greater" (in other words, "the predetermined deterioration condition" is satisfied), and otherwise, it can be determined that "the degree of deterioration is less". The predetermined value $V_{dg}$ may be determined in advance and stored in the storage part 403, or may be calculated by the battery state calculation part 404 based on each of the cell voltages V11 to V33. In the following description, the "battery cell 10 with a greater degree of deterioration" may be referred to as a "deterioration progression cell".

(Partial Discharge Control by Balancing Circuit 20)

As illustrated in FIG. 4, the battery module 100 such as a lithium-ion secondary battery generally includes the balancing circuit 20.

This enables the capacity recovery control part 412 of the present embodiment to perform partial discharge control only on some battery cells 10 by using the balancing circuit 20 before uniformly applying a discharge current to each battery cell 10 included in the battery module 100. As a result, the voltage condition shown in Expression (1) can be extended.

That is, when a user instruction to "execute partial discharge control" is input to the control part 570, the capacity recovery control part 412 closes the switch 22 for the deterioration progression cell before applying the discharge pulse, to select and discharge only the deterioration progression cell, thereby lowering its SOC. After the partial discharge control ends, the capacity recovery control part 412 opens the switch 22 and uniformly applies a discharge current to each battery cell 10 of the battery module 100.

By executing this partial discharge control, the cell voltage V of the deterioration progression cell can be lowered to a greater extent than the other cell voltages V in advance, thus satisfying the voltage condition of Expression (1) under a wide range of discharge pulse conditions. Note that the partial discharge control is not limited to the passive type balancing circuit 20 illustrated in FIG. 3, but can be similarly realized in an active type balancing circuit (not illustrated).

(Selection of Battery Module Using Switch 110)

As illustrated in FIG. 4, in the case of the battery pack 510 in which the plurality of battery modules 100 can be connected in parallel, even when a high-current discharge pulse is applied to the battery pack 510, a large current is not always applied to the deterioration progression cell. Therefore, when the user gives a predetermined instruction, the capacity recovery control part 412 classifies the module 100 into a module including the deterioration progression cell and a module not including the deterioration progression cell. Then, the capacity recovery control part 412 turns on the switch 110 only for the module 100 including the deterioration progression cell, and turns off the switch 110 for the other modules 100. As a result, only the module 100 including the deterioration progression cell can be selected, and the discharge pulse can be applied.

(Positive Electrode Deterioration Prevention Process)

The capacity recovery control part 412 can limit the discharge current value and the application time of the discharge pulse according to not only the voltage condition of Expression (1) described above but also other conditions.

For example, even in the deterioration progression cell, repeatedly applying the discharge pulse may cause the positive electrode to become overdischarged and accelerate deterioration in the positive electrode. In order to prevent this, it is preferable to control the amount of electricity applied by the discharge pulse so that the positive electrode is not overdischarged. This is realized by the following method.

· Step #1: Acquisition of charge-discharge curve of battery cell 10

First, for the prototype of the battery cell 10, the charge-discharge curves of the cell voltage V, the positive electrode potential Ep, and the negative electrode potential En (cf. FIG. 1), that is, the characteristics of V, Ep, and En for various discharge amounts are acquired. To directly measure the positive electrode potential Ep and the negative electrode potential En, it is necessary to destroy the battery cell 10, and hence the battery cell 10 of the same type as that applied to the battery pack 510 is used as a prototype to acquire its charge-discharge curve.

· Step #2: Acquisition of charge-discharge curve of cell voltage V of deterioration progression cell

The battery state determination part 401 stores the relationship between the cell voltage V and the current value for the deterioration progression cell in the storage part 403. Integrating the current value yields the charge-discharge amount, and using this, the battery state calculation part 404 calculates data for the charge-discharge curve of the cell voltage V of each deterioration progression cell. The voltage of the charge-discharge curve is desirably a value close to the open circuit voltage. The energization method in the calculation of the data for the charge-discharge curve is optional.

For example, there is a method of discharging the deterioration progression cell from a fully charged state to a fully discharged state at a small, constant current, or a method of charging the cell from the fully discharged state to the fully charged state at a small, constant current. A method that may also be used is to repeat a cycle of discharging the deterioration progression cell at a constant current for a certain time and then pausing for a certain time from the fully charged state to the fully discharged state. In addition, a method that may also be used is to repeat a cycle of charging the deterioration progression cell at a constant current for a certain time and then pausing for a certain time from a fully discharged state to a fully charged state. By such a method, data on the relationship between the charge-discharge amount and the open circuit voltage can be acquired.

There is also a method of acquiring the current waveform and the voltage waveform of the deterioration progression cell during operation in the normal mode Mn, statistically processing these waveforms, or performing regression calculation processing (reproduction calculation processing) based on an equivalent circuit to estimate an open circuit voltage, and estimating the relationship between the charge-discharge amount and the open circuit voltage. With respect to the energization method in the calculation of the data for the charge-discharge curve described above, "discharging from the fully charged state to the fully discharged state" and "charging from the fully discharged state to the fully charged state" have been described, but the energization method is not necessarily limited to discharging or charging within these ranges. The charge-discharge range is desirably wide, and it is most desirable to perform charging and discharging within a range of 100%. However, as long as the subsequent step can be smoothly performed, charging and discharging may be performed within a range of 50% or more from the fully charged state to the fully discharged state. Furthermore, if possible, the charge-discharge range may be in the range of less than 50%.

· Step #3: Acquisition of charge-discharge curves of positive electrode potential Ep and negative electrode potential En of deterioration progression cell

Next, the battery state calculation part 404 constructs the charge-discharge curves of the positive electrode potential Ep and the negative electrode potential En of the deterioration progression cell by regression calculation processing (reproduction calculation processing), based on the charge-discharge curve of the prototype stored in advance in the storage part 403 and the charge-discharge curve of the cell voltage V of the deterioration progression cell.

The content of the regression calculation processing (reproduction calculation processing) is described in PTL 2 mentioned above, and the outline thereof will be described below.

First, the battery state calculation part 404 obtains a positive electrode active material amount $m_p$, a negative electrode active material amount $m_n$, an index $C_p$ of the positional relationship of the discharge curve of the positive electrode, and an index $C_n$ of the positional relationship of the discharge curve of the negative electrode as the correction parameters, and stores these in the storage part 403. Next, the battery state calculation part 404 multiplies the discharge amount of the positive electrode 12 (cf. FIG. 2) by the positive electrode active material amount $m_p$, multiplies the discharge amount of the negative electrode 13 (cf. FIG. 2) by the positive electrode active material amount $m_p$, and obtains calculated values of the positive electrode discharge curve and the negative electrode discharge curve, based on the reference mass of the positive electrode 12 and the reference mass of the negative electrode 13.

FIG. 8 is a diagram illustrating an example of a charge-discharge curve obtained by calculation for a deterioration progression cell.

In FIG. 8, the horizontal axis represents a discharge amount Q [Ah], the value "0" represents the fully charged state, and the negative value represents the overcharged state. The vertical axis on the left side of FIG. 8 represents the potential and the voltage. The vertical axis on the right side of FIG. 8 is a potential based on the lithium electrode. Hereinafter, the potential based on the lithium electrode is expressed in units of "V vs. Li/Li$^+$".

The calculated values of the positive electrode potential Ep and the negative electrode potential En (cf. FIG. 1) are referred to as a positive electrode discharge curve calculation value Epc (positive electrode potential curve) and a negative electrode discharge curve calculation value Enc (negative electrode potential curve). The difference (Epc - Enc) between these is referred to as a battery discharge curve calculation value Vc. The battery state calculation part 404 adjusts $m_p$, $m_n$, $C_p$, and $C_n$, which are correction parameters, so that the battery discharge curve calculation value Vc approaches (desirably matches) the charge-discharge curve of the actually measured cell voltage V. Then, the positive electrode discharge curve calculation value Epc and the negative electrode discharge curve calculation value Enc are recalculated and updated based on the adjusted correction parameters $m_p$, $m_n$, $C_p$, $C_n$.

The positive electrode discharge curve calculation value Epc, the negative electrode discharge curve calculation value Enc, and the battery discharge curve calculation value Vc illustrated in FIG. 8 are examples obtained by such reproduction calculation processing. The illustrated example shows a state in which a capacity deviation has occurred between the positive electrode and the negative electrode, and the discharge end of the negative electrode discharge curve calculation value Enc and the discharge end of the battery discharge curve calculation value Vc coincide with each other.

· Step #4: Calculation of charge-discharge capacity of deterioration progression cell in predetermined charged state

Next, the battery state calculation part 404 calculates the charge-discharge capacity of the deterioration progression cell in a predetermined charged state based on the positive electrode discharge curve calculation value Epc and the negative electrode discharge curve calculation value Enc. More specifically, a discharge amount $Q_{p0}$ (first discharge amount) corresponding to a predetermined positive electrode potential $V_{p0}$ (first potential), a discharge amount $Q_{n0}$ (second discharge amount) corresponding to a predetermined negative electrode potential $V_{n0}$ (second potential), and a difference ($Q_{p0}$ - $Q_{n0}$) between both are calculated.

Here, the negative electrode potential $V_{n0}$ is a potential at the discharge end of the negative electrode discharge curve calculation value Enc, and may be set at a position where the negative electrode potential rapidly rises. In the illustrated example, the negative electrode potential $V_{n0}$ is set to 0.4 [V vs. Li/Li$^+$]. The positive electrode potential $V_{p0}$ is a potential slightly higher than the discharge end of the positive electrode discharge curve calculation value Epc, and may be set to a potential before the positive electrode potential rapidly decreases. In the illustrated example, the positive electrode potential $V_{p0}$ is set to "0.6 V vs. Li/Li$^+$".

Here, when the energization electricity amount of the pulse discharge exceeds ($Q_{p0}$ - $Q_{n0}$) in the deterioration progression cell, the positive electrode is discharged to the overdischarge region, which may accelerate the deterioration in the positive electrode.

Therefore, when the remaining capacity of the battery cell 10 with the greatest deterioration is Qm and the energization electricity amount due to the pulse discharge is Qr, the capacity recovery control part 412 sets the energization electricity amount Qr in the capacity recovery control to satisfy:

$$Qm < Qr < Q_{p0} - Q_{n0} \cdots \text{Expression (2)}$$

This makes it possible to inhibit material deterioration of the positive electrode.

[Examples]

<First Example>

Hereinafter, various examples and comparative examples of the present embodiment will be described, and first, a first example will be described.

In the present example, charging and discharging were repeated for the battery module 100 illustrated in FIG. 3, and the capacities of the battery cells 10-1, 10-2, 10-3 were reduced to 80%, 70%, and 80%, respectively, with respect to the initial capacity. That is, the battery cell 10-2 was a cell with the maximum degree of deterioration, and the battery cells 10-1, 10-3 were cells with a lesser degree of deterioration.

In the present example, before the capacity recovery control, the battery module 100 was discharged at a discharge rate of 1C until the cell voltage V2 of the battery cell 10-2 reached the lower limit voltage $V_{low}$. That is, discharging of the individual battery cells 10 using the balancing circuit 20 was not performed. A state in which the cell voltage V2 has caused to reach the lower limit voltage $V_{low}$ in this manner is referred to as a "capacity recovery preparation state". Note that the "discharge rate of 1C" means a current density at which the battery capacity is discharged in one hour.

After the capacity recovery preparation state described above was established, the capacity recovery control was executed. In the capacity recovery control of the present example, a discharge pulse was applied to the battery module 100 in the capacity recovery preparation state at a discharge rate of 6 C for 10 seconds, and then the battery module 100 was held in an open circuit state for 15 minutes. By this capacity recovery control, the cell voltages V1, V2, V3 satisfy the voltage condition of Expression (1), that is, "V2 < $V_{low}$ < V1, V3".

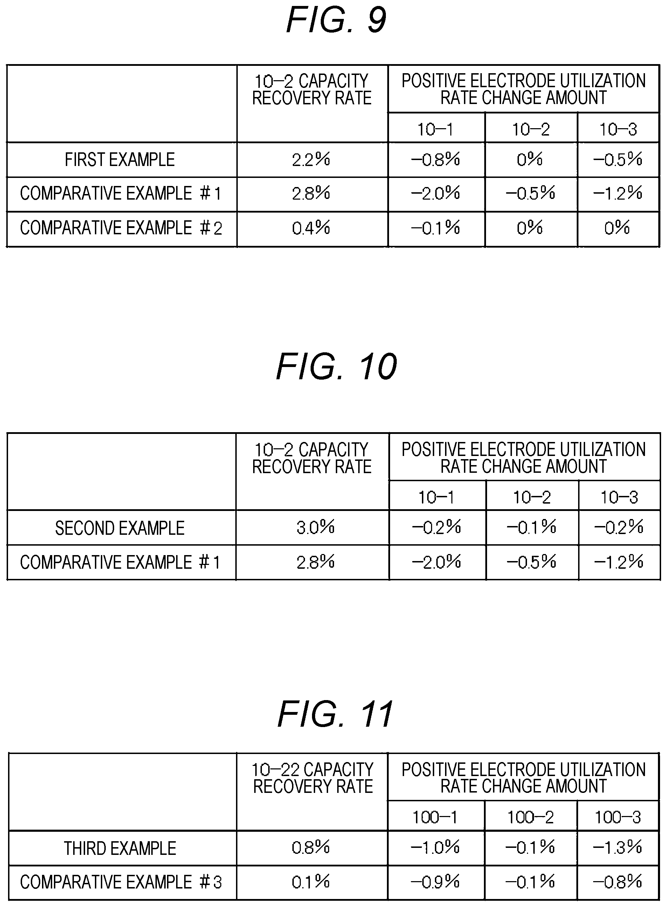

FIG. 9 is a diagram illustrating the capacity recovery rate and the amount of change in the positive electrode utilization rate of the deterioration progression cell in each of the first example and comparative examples.

Here, the capacity recovery rate is a percentage of the recovered capacity with respect to the initial capacity. The positive electrode utilization rate corresponds to the positive electrode active material amount $m_p$ described above, and is a value normalized by taking $m_p$ in its initial state as 100%. The decrease in the positive electrode utilization rate means that the positive electrode has deteriorated.

As illustrated in the drawing, in the first example, the capacity recovery rate of the battery cell 10-2 was 2.2%. The amounts of change in the positive electrode utilization rates of the battery cells 10-1, 10-2, 10-3 were -0.8%, 0%, and -0.5%, respectively.

Next, Comparative Example #1 and Comparative Example #2 will be described.

Comparative Example #1 is an example in which a discharge pulse was applied at a discharge rate of 15 C for 4 seconds in the capacity recovery preparation state described above, and then held in the open circuit state for 15 minutes. In Comparative Example #1, "V1, V2, V3 < $V_{low}$" is satisfied, and the relationship of Expression (1) described above does not hold.

As illustrated in FIG. 9, in Comparative Example #1, the capacity recovery rate of the battery cell 10-2 was 2.8%, and a higher capacity recovery rate than in the first example was obtained. However, particularly, the positive electrode utilization rates of the battery cells 10-1, 10-3 are greatly reduced, accelerating the deterioration in the battery cells 10-1, 10-3 that have not deteriorated so much, which has been problematic.

Next, Comparative Example #2 is an example in which a discharge pulse was applied at a discharge rate of 0.5 C for 120 seconds in the capacity recovery preparation state described above, and then held in the open circuit state for 15 minutes. In Comparative Example #2, "$V_{low}$ < V1, V2, V3" is satisfied, and the relationship of Expression (1) described above does not hold.

As illustrated in the drawing, in Comparative Example #2, the capacity recovery rate of the battery cell 10-2 was 0.4%, and the capacity recovery rate was lower than that of the first example.

As described above, according to the first example, it is possible to effectively recover the capacity of the battery cell 10-2 while inhibiting the decrease in the positive electrode utilization rate.

<Second Example>

Next, a second embodiment will be described.

Also, in the present example, similarly to the first example, charging and discharging were repeated for the battery module 100 illustrated in FIG. 3, and the capacities of the battery cells 10-1, 10-2, 10-3 were reduced to 80%, 70%, and 80%, respectively, with respect to the initial capacity.

Next, partial discharge control was performed on the battery cell 10-2 as a deterioration progression cell using the balancing circuit 20. That is, the switch 22 corresponding to the battery cell 10-2 was closed, and the battery cell 10-2 was discharged to the lower limit voltage $V_{low}$.

Next, as the capacity recovery control, a discharge pulse was applied to the battery module 100 at a discharge rate of 15 C for 4 seconds, and then the battery module 100 was held in the open circuit state for 15 minutes. In the present example, since the capacity recovery control is performed after only the battery cell 10-2 is discharged, the voltage condition of Expression (1), that is, "V2 < $V_{low}$ < V1, V3", is also satisfied in this case.

FIG. 10 is a diagram illustrating the capacity recovery rate and the amount of change in the positive electrode utilization rate of the deterioration progression cell in each of the second example and a comparative example.

Comparative Example #1 in the drawing is the same as that illustrated in FIG. 9. According to the present example, a higher capacity recovery rate than that of Comparative Example #1 can be realized, and a decrease in the positive electrode utilization rate is also reduced. As described above, according to the second embodiment, it is possible to realize a larger capacity recovery rate while further inhibiting a decrease in the positive electrode utilization rate.

<Third Example>

Next, a third example will be described.

In the present example, charging and discharging were repeated for the battery pack 510 illustrated in FIG. 4, and the capacities of the battery modules 100-1, 100-2, 100-3 were reduced to 80%, 70%, and 80% of the initial capacity, respectively. Among the nine battery cells 10-11 to 10-33 in FIG. 4, only the capacity of the battery cell 10-22 decreases to 70% with respect to the initial capacity, and the capacity of the other eight battery cells 10 holds 80% with respect to the initial capacity.

In the present example, partial discharge control was performed in which the switch 22 (cf. FIG. 3) for the battery cell 10-22 was closed to discharge only the battery cell 10-22 to the lower limit voltage $V_{low}$. When the partial discharge control was completed, the switch 110 was completely closed, a discharge pulse was applied at a discharge rate of 15 C for 4 seconds as the capacity recovery control, and the capacitor was held in the open circuit state for 15 minutes. In the present example, since all the switches 110 are closed, not only the control device 500 but also the battery modules 100-1 and 100-3 charge the battery module 100-2. Thus, for the cell voltage of each battery cell 10, a relationship of "V22, < V11, V12, V13, V31, V32, V33 < V21, V23" holds. Therefore, even when the currents flowing through the battery modules 100-1 to 100-3 are nonuniform, the voltage condition of Expression (1), that is, "V22 < $V_{low}$ < (voltages of other cells)" is satisfied.

Next, Comparative Example #3 will be described.

In Comparative Example #3, the partial discharge control was not performed, and the battery modules 100-1 to 100-3 were set to the "capacity recovery preparation state". That is, in each of the battery modules 100-1 to 100-3, the lowest cell voltage V of the included battery cell 10 coincides with the lower limit voltage $V_{low}$. Thereafter, all the switches 110 were closed, a discharge pulse was applied at a discharge rate of 15 C for 4 seconds as the capacity recovery control, and the capacitor was held in the open circuit state for 15 minutes.

FIG. 11 is a diagram illustrating the capacity recovery rate and the amount of change in the positive electrode utilization rate of the deterioration progression cell in each of the third embodiment and Comparative Example #3. Note that the amount of change in the positive electrode utilization rate is in module units.

As illustrated in the drawing, according to the present embodiment, a larger capacity recovery rate than that of Comparative Example #3 can be obtained.

[Effects of Embodiment]

As thus described, according to the embodiment described above, the secondary battery control device (500) includes: an operation mode selection part 420 that selects one of a first operation mode (Mn) and a second operation mode (Mr) as an operation mode; a first discharge control part (410) that stops discharging the secondary battery (510) when the operation mode selection part 420 selects the first operation mode (Mn), and when a terminal voltage (V1 to V3, V11 to V33) of one of the plurality of battery cells 10 included in the secondary battery (510) is lower than a first voltage ($V_{low}$); and a second discharge control part (412) that applies a discharge current to the secondary battery (510) when the operation mode selection part 420 selects the second operation mode (Mr), such that a terminal voltage of one of the plurality of battery cells 10 satisfying a predetermined deterioration condition is lower than the first voltage ($V_{low}$), and a terminal voltage of each of the other battery cells 10 is equal to or higher than the first voltage ($V_{low}$).

According to another aspect, the embodiment described above is a capacity recovery method for a secondary battery (510) including a plurality of battery cells 10, the capacity recovery method including: a first step of evaluating a deterioration state of each of the plurality of battery cells 10; and a second step of applying a discharge current to the secondary battery (510) such that a voltage of the battery cell 10 with greater deterioration among the plurality of battery cells 10 is lower than an end-of-discharge voltage ($V_{low}$) of the battery cell 10 in normal use, and a terminal voltage of each of the other batter cells 10 is equal to or higher than the end-of-discharge voltage ($V_{low}$).

As a result, the terminal voltage of the battery cell 10 not satisfying the deterioration condition can be kept relatively high, and the capacity of the secondary battery can be appropriately recovered by inhibiting the deterioration in the battery cell 10 not satisfying the deterioration condition.

It is further preferable that the second discharge control part (412) applies a discharge current to the secondary battery (510) such that a terminal voltage of one of the plurality of battery cells 10 is lower than the first voltage ($V_{low}$), the terminal voltage being equal to or lower than a predetermined value ($V_{dg}$) or being lower than a terminal voltage of each of the other battery cells, and the terminal voltage of each of the other battery cells 10 is equal to or higher than the first voltage ($V_{low}$). It is further preferable that when the operation mode selection part 420 selects the second operation mode (Mr), the second discharge control part (412) further includes a partial discharge function of selecting and discharging the battery cell 10 satisfying the deterioration condition before applying the discharge current to the secondary battery (510).

Thereby, the terminal voltage of the battery cell 10 not satisfying the deterioration condition can be kept higher, and the deterioration can be further inhibited.

It is further preferable that the secondary battery (510) includes a basic battery unit (100) including the plurality of battery cells 10, the plurality of basic battery units (100) is connected in parallel, and switches 110 that switch whether to apply a current to the respective basic battery units (100) are further included, and when the operation mode selection part 420 selects the second operation mode (Mr), before applying the discharge current, the second discharge control part (412) turns on one of the switches 110 corresponding to the basic battery unit (100) that includes the battery cell 10 satisfying the deterioration condition, and turns off the other switches 110.

This makes it possible to prevent a discharge current from being applied to the basic battery unit (100) that does not include the battery cell 10 satisfying the deterioration condition. Therefore, it is possible to further inhibit the deterioration in the battery cells 10 included in the basic battery unit (100).

It is further preferable that the secondary battery control device (500) further includes a battery state calculation part 404 that acquires a positive electrode potential curve (Epc) and a negative electrode potential curve (Enc) based on a charge curve or a discharge curve of the battery cell 10 satisfying the deterioration condition, and acquires a first discharge amount ($Q_{p0}$) corresponding to a predetermined first potential ($V_{p0}$) in the positive electrode potential curve (Epc) and a second discharge amount ($Q_{n0}$) corresponding to a predetermined second potential ($V_{n0}$) in the negative electrode potential curve (Enc), and the second discharge control part (412) determines an energization electricity amount Qr for the battery cell 10 satisfying the deterioration condition such that an energization electricity amount Qr of the discharge current exceeds a remaining capacity Qm of the battery cell 10 with the greatest deterioration and is less than a difference ($Q_{p0} - Q_{n0}$) between the first discharge amount ($Q_{p0}$) and the second discharge amount ($Q_{n0}$).

As a result, it is possible to determine the energization electricity amount Qr based on the positive electrode potential curve (Epc) and the negative electrode potential curve (Enc), and inhibit the material deterioration of the positive electrode of the battery cell 10 satisfying the deterioration condition.

[Modification]

The present invention is not limited to the embodiment described above, and various modifications are possible. The embodiment described above has been exemplified for easy understanding of the present invention, and are not necessarily limited to those having all the configurations described above. Another configuration may be added to the configuration of the above embodiment, and a part of the configuration may be replaced with another configuration. The control lines and the information lines illustrated in the drawings indicate what is considered to be necessary for the description, and do not necessarily indicate all the control lines and the information lines necessary for the product. In practice, it may be considered that almost all the configurations are connected to each other. Possible modifications to the above embodiment are, for example, as follows.

(1) Since the hardware of the control part 570 in the above embodiment can be realized by a general computer, a program or the like for executing the processes described above may be stored in a storage medium or distributed via a transmission path.

(2) Each of the processes described above has been described as a software process using a program in the above embodiment, but a part or all of the processes may be replaced with a hardware process using an application-specific integrated circuit (ASIC), a field-programmable gate array (FPGA), or the like.

(3) Various processes executed in the above embodiment may be executed by a server computer via a network (not illustrated), and various types of data stored in the above embodiment may also be stored in the server computer.

Reference Signs List

10 battery cell
100 battery module (basic battery unit)
110 switch
404 battery state calculation part
410 normal operation control part (first discharge control part)
412 capacity recovery control part (second discharge control part)
420 operation mode selection part
500 control device (control device for secondary battery)
510 battery pack (secondary battery)
Mn normal mode (first operation mode)
Mr capacity recovery mode (second operation mode)
Qm remaining capacity
Qr energization electricity amount
SY secondary battery system
Enc negative electrode discharge curve calculation value (negative electrode potential curve)
Epc positive electrode discharge curve calculation value (positive electrode potential curve)
$Q_{n0}$ discharge amount (second discharge amount)
$Q_{p0}$ discharge amount (first discharge amount)
$V_{n0}$ negative electrode potential (second potential)
$V_{p0}$ positive electrode potential (first potential)
$V_{low}$ lower limit voltage (first voltage)
V1 to V3, V11 to V33 cell voltage (terminal voltage)

**Claims**

1. A secondary battery control device that includes a plurality of battery cells, the control device comprising:

    an operation mode selection part that selects one of a first operation mode and a second operation mode as an operation mode;
    a first discharge control part that stops discharging the secondary battery when the operation mode selection part selects the first operation mode, and upon a terminal voltage of one of the plurality of the battery cells falling below a first voltage; and
    a second discharge control part that applies a discharge current to the secondary battery when the operation mode selection part selects the second operation mode, such that a terminal voltage of one of the plurality of the battery cells satisfying a predetermined deterioration condition is lower than the first voltage, and a terminal voltage of each of other battery cells is equal to or higher than the first voltage.

2. The secondary battery control device according to claim 1, wherein the second discharge control part applies a discharge current to the secondary battery such that a terminal voltage of one of the plurality of the battery cells is lower than the first voltage, the terminal voltage being equal to or lower than a predetermined value or being lower than a terminal voltage of each of the other battery cells, and the terminal voltage of each of the other battery cells is equal to or higher than the first voltage.

3. The secondary battery control device battery according to claim 1, wherein when the operation mode selection part selects the second operation mode, the second discharge control part causes the battery cell satisfying the deterioration condition to be selectively discharged before applying the discharge current to the secondary battery.

4. The secondary battery control device according to claim 1 or 2, wherein

the secondary battery includes a basic battery unit including the plurality of the battery cells, the plurality of basic battery units are connected in parallel, and the secondary battery further includes switches that switch whether to apply a current to the respective basic battery units, and
when the operation mode selection part selects the second operation mode, before applying the discharge current, the second discharge control part turns on one of the switches corresponding to the basic battery unit that includes the battery cell satisfying the deterioration condition, and turns off the other switches.

5. The secondary battery control device according to any one of claims 1 to 3, further comprising a battery state calculation part that acquires a positive electrode potential curve and a negative electrode potential curve based on a charge curve or a discharge curve of the battery cell satisfying the deterioration condition, and acquires a first discharge amount corresponding to a predetermined first potential in the positive electrode potential curve and a second discharge amount corresponding to a predetermined second potential in the negative electrode potential curve, wherein
the second discharge control part determines an energization electricity amount for the battery cell satisfying the deterioration condition such that an energization electricity amount of the discharge current exceeds a remaining capacity of the battery cell with greatest deterioration and is less than a difference between the first discharge amount and the second discharge amount.

6. A secondary battery system comprising:

a secondary battery including a plurality of battery cells;
an operation mode selection part that selects one of a first operation mode and a second operation mode as an operation mode;
a first discharge control part that stops discharging the secondary battery when the operation mode selection part selects the first operation mode and upon a terminal voltage of one of the plurality of the battery cells falling below a first voltage; and
a second discharge control part that applies a discharge current to the secondary battery when the operation mode selection part selects the second operation mode, such that a terminal voltage of one of the plurality of the battery cells satisfying a predetermined deterioration condition is lower than the first voltage, and a terminal voltage of each of other battery cells is equal to or higher than the first voltage.

7. A secondary battery capacity recovery method that includes a plurality of battery cells, the secondary battery capacity recovery method comprising:

a first step of evaluating a deterioration state of each of the plurality of the battery cells; and
a second step of applying a discharge current to the secondary battery such that a voltage of the battery cell with greater deterioration among the plurality of the battery cells is lower than an end-of-discharge voltage of the battery cell in normal use, and a terminal voltage of each of other batter cells is equal to or higher than the end-of-discharge voltage.

8. The secondary battery capacity recovery method according to claim 7, wherein in the first step, a deterioration state of each of the battery cells is evaluated based on a terminal voltage.

9. The secondary battery capacity recovery method according to claim 7 or 8, wherein in the second step, the battery cell with greater deterioration is selectively discharged before the discharge current is applied to the secondary battery.

10. A secondary battery control device that includes a plurality of battery cells and a balancing circuit that discharges the battery cells according to a control signal supplied, the control device comprising:

a function of outputting the control signal to reduce a difference between terminal voltages of the plurality of the battery cells; and
a function of outputting the control signal to discharge a battery cell selected from among the plurality of the battery cells, using the balancing circuit.

# FIG. 1

# FIG.2

## FIG. 3

## FIG. 4

# FIG. 5

BATTERY PACK 510

CONTROL PART 570

SY

500

502

503

552

Ev

V

560

A 551

553

562

564

554

POWER SYSTEM 610

DISPLAY 600

# FIG. 6

| CPU 901 | RAM 902 | ROM 903 | HDD 904 |

COMMUNICATION I/F 905

INPUT-OUTPUT I/F 906

MEDIA I/F 907

900

COMMUNICATION CIRCUIT 915

INPUT-OUTPUT DEVICE 916

RECORDING MEDIUM 917

## FIG. 7

MEASUREMENT SIGNAL

570

400 — BATTERY STATE ACQUISITION PART

403 — STORAGE PART

401 — BATTERY STATE DETERMINATION PART

404 — BATTERY STATE CALCULATION PART

NORMAL OPERATION CONTROL PART — 410

CAPACITY RECOVERY CONTROL PART — 412

405 — TIMER PART

**Mn, Mr**

420 — OPERATION MODE SELECTION PART

CONTROL SIGNAL

## FIG. 8

## FIG. 9

| | 10−2 CAPACITY RECOVERY RATE | POSITIVE ELECTRODE UTILIZATION RATE CHANGE AMOUNT | | |
| --- | --- | --- | --- | --- |
| | | 10−1 | 10−2 | 10−3 |
| FIRST EXAMPLE | 2.2% | −0.8% | 0% | −0.5% |
| COMPARATIVE EXAMPLE #1 | 2.8% | −2.0% | −0.5% | −1.2% |
| COMPARATIVE EXAMPLE #2 | 0.4% | −0.1% | 0% | 0% |

## FIG. 10

| | 10−2 CAPACITY RECOVERY RATE | POSITIVE ELECTRODE UTILIZATION RATE CHANGE AMOUNT | | |
| --- | --- | --- | --- | --- |
| | | 10−1 | 10−2 | 10−3 |
| SECOND EXAMPLE | 3.0% | −0.2% | −0.1% | −0.2% |
| COMPARATIVE EXAMPLE #1 | 2.8% | −2.0% | −0.5% | −1.2% |

## FIG. 11

| | 10−22 CAPACITY RECOVERY RATE | POSITIVE ELECTRODE UTILIZATION RATE CHANGE AMOUNT | | |
| --- | --- | --- | --- | --- |
| | | 100−1 | 100−2 | 100−3 |
| THIRD EXAMPLE | 0.8% | −1.0% | −0.1% | −1.3% |
| COMPARATIVE EXAMPLE #3 | 0.1% | −0.9% | −0.1% | −0.8% |

**EP 4 398 379 A1**

## INTERNATIONAL SEARCH REPORT

International application No.

**PCT/JP2022/029277**

### A. CLASSIFICATION OF SUBJECT MATTER

*H01M 10/44*(2006.01)i; *H01M 10/42*(2006.01)i; *H01M 10/48*(2006.01)i; *H02J 7/00*(2006.01)i
FI: H01M10/44 P; H01M10/42 P; H01M10/48 P; H02J7/00 302C

According to International Patent Classification (IPC) or to both national classification and IPC

### B. FIELDS SEARCHED

Minimum documentation searched (classification system followed by classification symbols)

H01M10/44; H01M10/42; H01M10/48; H02J7/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2015-033283 A (FDK CORP.) 16 February 2015 (2015-02-16) paragraphs [0016]-[0045], fig. 1-2 | 10 |
| A | | 1-9 |
| A | JP 2018-063906 A (TOYOTA MOTOR CORP.) 19 April 2018 (2018-04-19) paragraphs [0027]-[0100], fig. 1, -8 | 1-10 |
| A | JP 2020-198673 A (OHK KENKYUSHO KK) 10 December 2020 (2020-12-10) paragraphs [0034]-[0058], fig. 1, 4 | 1-10 |

☐ Further documents are listed in the continuation of Box C.　　☑ See patent family annex.

| | |
|---|---|
| *　Special categories of cited documents:<br>"A"　document defining the general state of the art which is not considered to be of particular relevance<br>"E"　earlier application or patent but published on or after the international filing date<br>"L"　document which may throw doubts on priority claim(s) or which is cited to establish the publication date of another citation or other special reason (as specified)<br>"O"　document referring to an oral disclosure, use, exhibition or other means<br>"P"　document published prior to the international filing date but later than the priority date claimed | "T"　later document published after the international filing date or priority date and not in conflict with the application but cited to understand the principle or theory underlying the invention<br>"X"　document of particular relevance; the claimed invention cannot be considered novel or cannot be considered to involve an inventive step when the document is taken alone<br>"Y"　document of particular relevance; the claimed invention cannot be considered to involve an inventive step when the document is combined with one or more other such documents, such combination being obvious to a person skilled in the art<br>"&"　document member of the same patent family |

| Date of the actual completion of the international search | Date of mailing of the international search report |
|---|---|
| **01 September 2022** | **13 September 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

| International application No. |
|---|
| **PCT/JP2022/029277** |

**Box No. III**      **Observations where unity of invention is lacking (Continuation of item 3 of first sheet)**

This International Searching Authority found multiple inventions in this international application, as follows:

(Invention 1) Claims 1-9

    Claims 1-9 are classified as invention 1 as a result of having the special technical feature of "a control device for a secondary battery having a plurality of battery cells, the control device comprising: an operation mode selection unit that selects one among a first operation mode and a second operation mode as an operation mode; a first discharge control unit that, when the operation mode selection unit has selected the first operation mode, stops the discharge of the secondary battery if the terminal voltage of any one of the plurality of battery cells falls below a first voltage; and a second discharge control unit that, when the operation mode selection unit has selected the second operation mode, applies a discharge current to the secondary battery such that the terminal voltage of any of the plurality of battery cells that satisfies a prescribed deterioration condition falls below the first voltage, and such that the terminal voltage of any other battery cells becomes at least the first voltage."

(Invention 2) Claim 10

    Claim 10 is "a control device for a secondary battery having a plurality of battery cells and a balancing circuit that discharges the battery cells in accordance with a supplied control signal, the control device being characterized by having a function for outputting the control signal so as to decrease the difference between the terminal voltage of the plurality of battery cells, and a function for outputting the control signal so as to discharge a battery cell selected from among the plurality of battery cells by using the balancing circuit." Claim 10 shares, with claim 1 classified as invention 1, the feature of "a control device for a secondary battery having a plurality of battery cells." However, this feature is so well known that it is not necessary to provide an example thereof, and does not make a contribution over the prior art. Therefore, this feature cannot be said to be a special technical feature. Furthermore, there is no other identical or corresponding special technical feature between these inventions.

    Additionally, claim 10 does not depend from claim 1. Moreover, claim 10 is not substantially identical to or similarly closely related to any of the claims classified as invention 1.

    Therefore, claim 10 cannot be classified as invention 1, and is classified as invention 2.

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**     ☐ The additional search fees were accompanied by the applicant's protest and, where applicable, the payment of a protest fee.

                         ☐ The additional search fees were accompanied by the applicant's protest but the applicable protest fee was not paid within the time limit specified in the invitation.

                         ☐ No protest accompanied the payment of additional search fees.

Form PCT/ISA/210 (continuation of first sheet) (January 2015)

**INTERNATIONAL SEARCH REPORT**
**Information on patent family members**

International application No.

**PCT/JP2022/029277**

| Patent document cited in search report | | | Publication date (day/month/year) | Patent family member(s) | | | Publication date (day/month/year) |
|---|---|---|---|---|---|---|---|
| JP | 2015-033283 | A | 16 February 2015 | WO | 2015/020084 | A1 | |
| JP | 2018-063906 | A | 19 April 2018 | US | 2018/0109121 | A1 | |
| | | | | paragraphs [0038]-[0113], fig. 1-8 | | | |
| | | | | EP | 3309892 | A1 | |
| | | | | CN | 107953786 | A | |
| | | | | KR | 10-2018-0041570 | A | |
| JP | 2020-198673 | A | 10 December 2020 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019106333 A

- JP 4884404 B